# EUROPEAN PATENT SPECIFICATION

(11) **EP 0 784 921 B1**
(45) Date of publication and mention of the grant of the patent: **05.09.2001**
(21) Application number: 96203611.7
(22) Date of filing: 19.12.1996
(51) Int. Cl.: A01F 25/20

(54) **Device and method for collecting silage material**
Maschine und Verfahren um Silofutter auszuschneiden
Appareil et méthode d'extraction d'ensilage

(30) Priority: 19.01.1996 NL 1002129
(43) Date of publication of application: 23.07.1997
(73) Proprietor: Trioliet Mullos B.V., 7581 HE Losser (NL)
(72) Inventor: Van der Plas, Nicolaas, 7576 WB Oldenzaal (NL)
(74) Representative: de Vries, Johannes Hendrik Fokke

(56) References cited:
- EP-A- 0 449 364
- EP-A- 0 650 665
- DE-A- 3 837 509
- FR-A- 2 541 860

## Description

The invention relates to a device for collecting silage material, which device is provided with a container comprising a bottom and two opposed side walls, and which is furthermore provided with a cutting board comprising a cutting member at its bottom edge, which cutting board is attached to at least one pivoting arm and which can be moved upwards and downwards in such a manner that the silage material can be cut from a stock thereof, which is located behind said device, and be deposited in said container, whereby at least one side wall is at its rear side provided with a side wall extension, which can pivot about a pivot pin extending substantially perpendicularly to said side wall.

A device of this kind may be provided with attaching means to be attached to the device to the three-point linkage of a tractor, so that the device can be hitched to a tractor. A device of this kind may also be provided with wheels, so that the device is mobile. The wheels may thereby be constructed in such a manner that they can be moved in vertical direction with respect to the device, so that the device can be positioned closer to the floor while collecting silage material. Also the mobile device can be hitched to a tractor.

A device of this type is known from DE-A-3837509. According to this publication the cutting board is attached to a telescopic arm, which is pivotably attached to the container. Both the angle between the pivoting arm and the container and the angle between the cutting board and the pivoting arm can be adjusted and/or varied by means of hydraulic cylinders.

Silage material can be collected by reversing the device into contact with a stock of silage material by means of a tractor, after which the device may be moved downwards, so that the rear edge of the bottom of the container will be positioned near the floor. Then the bottom edge of the cutting board is moved through the stock of silage material from the top to the bottom, so that the cutting member saws or cuts off part of the stock of silage material. The cut-off silage material falls downwards thereby and is deposited in the container, for example by a pivoting movement or otherwise of the cutting board, after the cutting member has been moved to a position near the floor.

Then a new quantity of silage material may be cut off by moving the bottom edge of the cutting board upwards, positioning it further rearwards and then moving it downwards again. It is also possible to move the device further rearwards before another amount of silage material is cut off.

In order to prevent the cut-off silage material which falls downwards during cutting from landing outside the device and/or landing at a place from which it cannot be deposited in the container by the cutting board, the side walls of the device, or one of said side walls, are (is) provided with a side wall extension, which, depending on the distance between the side wall and the silage material to be cut off, can be pivoted rearwards to a position near the silage material to be cut off. As a result of this the cut-off silage material falling downwards will remain within reach of the cb, so that it can be deposited in the container after being cut off.

The side wall extension which is known from DE-A-3837509 pivots about a pivot pin which is positioned near the rear side of the side wall, and is capable of pivoting rearwards through a selected angle, depending on the distance between the side wall and the silage material. As a result of this the position of the side wall extension is determined by the aforesaid distance to the silage material, as a result of which the side wall extension frequently does not optimally butt against the silage material.

From EP-A-0449364 a device for collecting silage material is known wherein the side wall extension consists of a number of plates which slide over each other. The side wall extension thereby has a vertical rear edge at all times, which also makes it difficult to effect a proper abutment to the stock of silage material.

The object of the invention is to provide a device for collecting silage material, whereby the side wall extension is constructed in such a manner that an optimum abutment of the rear edge of the side wall extension to the stock of silage material can be obtained.

In order to accomplish that objective the side wall extension is according to the invention constructed in such a manner that it is capable of pivoting as well as translating movement in a substantially vertical plane.

Since the side wall extension is capable of pivoting as well as translating movement, a proper abutment of the rear edge of the side wall extension to the various shapes which the stock of silage material may have is possible.

According to another aspect of the invention the side wall extension is capable of pivoting movement about a horizontal pivot pin, which is near its upper edge and its rear edge attached to an attaching member, which can be moved rearward and forward with respect to the side wall.

Since the pivot pin of the side wall extension is positioned far to the rear, the side wall extension will be pushed against the silage material with its rear edge under the influence of its own weight. As a result of this it is possible for the side wall extension to continue to a position near the floor with nearly its entire bottom edge in the working position, because the bottom edge will move forward upon pivoting forwards, because the pivot pin is positioned at the rear side.

According to another aspect of the invention the attaching member may consist of a rearwardly extensible arm attached to the side wall, whereby the pivot pin is positioned at the rearward end of said arm. The attaching member may thereby be constructed in such a manner that the pivot pin is pushed rearwards by for example a hydraulic force, a force exerted by a gas spring or by a mechanical spring. The attaching member may thereby consist of a telescopic arm, within which a coil spring may be present.

When the device is moved rearward into contact with a stock of silage material, a proper abutment of the side wall extension to the silage material can be obtained in that the pivot pin moves forward with respect to the side wall and the side wall extension pivots against the force of its own weight to a position in which an optimum abutment to the stock of silage material is obtained. Preferably the rear edge of the side wall extension is convex, curved and/or angular to match the generally concave shape which the surface of the stock of silage material usually has in practice.

According to another aspect of the invention the side wall extension may be mounted on the inner side of the side wall. Since the side wall and the side wall extension partially overlap, the side wall extension is supported by the side wall at its outer side, so that the side wall extension cannot move inwardly as a result of the pressure exerted by the silage material present on the inside of the side wall extension.

According to another aspect of the invention the bottom of the container, which may extend to a position near the floor with its rear edge, and which may be provided with a rearward extension, may be provided with a guide member for guiding said side wall extension. Said guide member thereby guides the bottom edge of the side wall extension, which guiding may take place both during the pivoting and during the translating movement. The guide member may consist of an upwardly extending edge, which prevents the side wall extension from bulging outwards, the guide member may also be made in the form of a duct, in which the bottom edge of the side wall extension can move without moving out in lateral direction.

In a preferred embodiment the side wall extension is near its corner point between rear edge and bottom edge provided with a guide plate, which is mounted on the outside of said side wall extension, substantially parallel thereto and spaced therefrom, and the bottom is provided with an upwardly extending guide edge, which may extend to a position between said guide plate and said side wall extension. As a result of that the side wall extension is effectively guided by the guide plate in its plane of movement, which guide plate is mounted in a position which is relatively impervious to fouling. According to another aspect of the invention the guide plate may thereby extend to the outside of the side wall in the forwardly moved, that is, pivoted or slid, position of the side wall extension. The connection between the guide plate and the side wall extension may also function as a stop member in that case.

The bottom may furthermore be provided with a stop member, which is capable of limiting the pivoting movement and/or the rearward movement of the side wall extension, for example in order to prevent the side wall extension from moving so far that a space is formed between the side wall extension and the side wall. Said stop member may be mounted in or on the guide member.

According to another aspect of the invention the side wall extension may be attached to the attaching member in such a manner that it is also capable of moving in a substantially upward direction. This provides an even greater freedom of movement of the side wall extension, so that an even better abutment both to the floor and to the silage material can be obtained. This upward movement may preferably be obtained by pivoting the attaching member to the side wall. In another preferred embodiment the side wall extension is provided with a slot, in which a pivot pin secured to the attaching member can move. Both embodiments will be explained in more detail hereafter.

The invention furthermore relates to a method for collecting silage material, wherein silage material is cut from a stock thereof by means of a downwardly pivoting cutting board, after which said silage material is deposited in a container, whereby one side wall of the container is extended in rearward direction by means of a pivotable side wall extension, which side wall extension is according to the invention pivoted about a pin which is moved in rearward and/or forward direction with respect to said side wall.

Hereafter a few embodiments of a device for collecting silage material will be described by way of illustration, whereby reference will be made to the drawing.
Figure 1 is a plan view of the device;
Figure 2 is a side view of the device according to Figure 1;
Figure 3 is likewise a side view of the device;
Figure 4 is a plan view of a detail of the device according to Figure 1;
Figure 5 is a side view of a part of a device;
Figure 6 is a side view of a part of another embodiment; and
Figures 7 and 8 show an embodiment wherein the side wall extension is provided with a guide plate.

The Figures are merely diagrammatic illustrations of the various embodiments, wherein like parts are numbered alike.

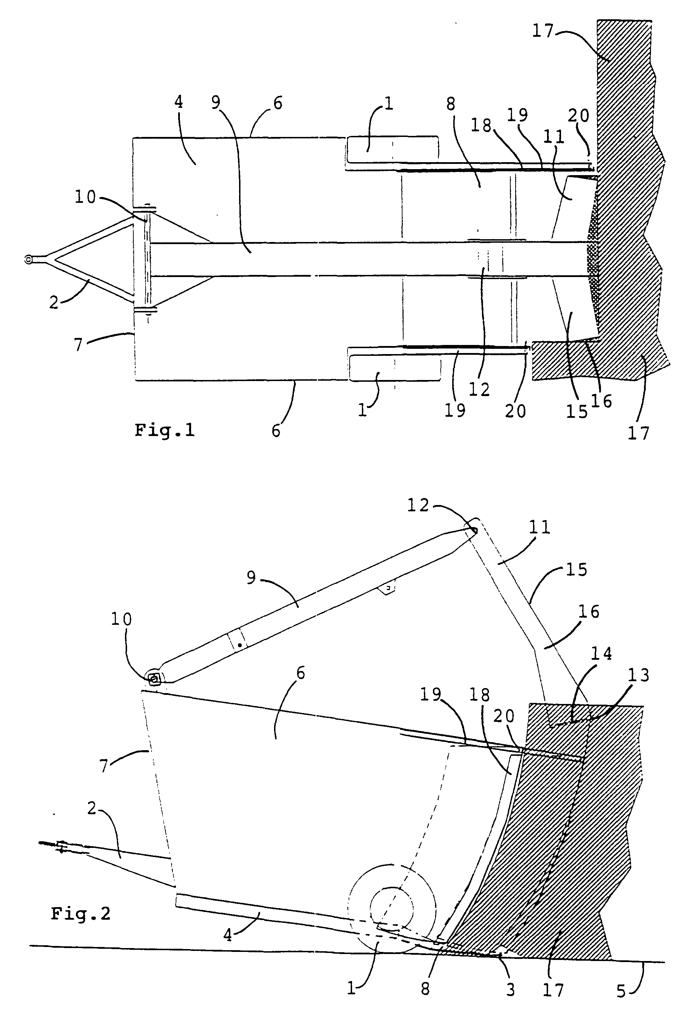

The device according to Figures 1, 2 and 3 comprises wheels 1 and a coupling member 2, by means of which the device can be attached to a tractor or other vehicle in order to be moved as a trailer behind said vehicle. The wheels 1 can be moved in vertical direction with respect to the device, so that the rear edge 3 of the bottom 4 can be moved to a position near the floor 5.

The device is provided with a container, which forms a loading space comprising two side walls 6, a front wall 7 and the aforesaid bottom 4. Bottom 4 is provided with a rearwardly extended part 8, which terminates in the aforesaid rear edge 3.

The device is furthermore provided with a pivoting arm 9, which is attached near the upper edge of the front wall 7 by means of a hinge construction 10, so that pivoting arm 9 can pivot in a vertical plane, whereby said pivoting of arm 9 is carried out by means of a hydraulic actuating cylinder (not shown).

Pivoting arm 9 is at its other end pivotably attached to cutting board 11. Cutting board 11 can be pivoted in a vertical plane with respect to pivoting arm 9, via hinge construction 12, by means of a hydraulic actuating cylinder 12.

Cutting board 11 is at its bottom edge provided with a cutting member, which consists of a main blade 13, which is positioned transversely to the direction of movement of the device, and two side blades 14, which extend substantially perpendicularly to main blade 13. Main blade 13 and side blades 14 together form a substantially U-shaped cutting member.

Cutting board 11 is provided with a plate-shaped part 15, which extends above main blade 13 for the main part, and with two side plates 16 extending substantially perpendicularly thereto, which extend above side blades 14 for the main part.

The bottom edge of cutting board 11 can be moved downwards by means of the aforesaid actuating cylinders (not shown), whereby silage material 17 is cut from a stock thereof. Cutting member 13, 14 may move in a vertical or circular path or in any other path, depending on the manner in which pivoting arm 9 and cutting board 11 are controlled, in order to cut off silage material and subsequently deposit said silage material in the container of the device via a movement of cutting board 11. Cutting board 11 thereby moves forward between side walls 6, which are spaced apart near the rear side of the device, by a distance which substantially corresponds with the width of cutting board 11.

When silage material is to be collected the device is reversed to a position near a stock of silage material 17, whereby the rear edge 3 of bottom 4 is moved to a position near the floor 5 by moving wheels 1 upwards. By moving the cutting board 11 a number of times respective parts of the silage material 17 are cut off and deposited in the container of the device. The silage material 17 will fall downwards upon being cut off. In order to prevent said silage material from landing outside the reach of cutting board 11, as a result of which it cannot be deposited in the container, it is important that the side walls 6 of the device properly butt against the stock of silage material 17.

In order to provide an optimum abutment the device is provided with two pivotable side wall extensions 18, which lie in the same plane as the rear part of side walls 6.

Side wall extensions 18 are pivotably attached to the end of a telescopic arm 19, whose other end is attached to side wall 6. Telescopic arm 19 is loaded by a coil spring provided within the arm, in such a manner that said arm is kept in the extended position by spring force. When the device is reversed into contact with a stock of silage material 17, arm 19 may be telescoped by the silage material. Pivot pin 20 of side wall extension 18 is thereby positioned near the rear edge of the side wall extension, so that said side wall extension can be pivoted into contact with the silage material under the influence of its own weight. If desired further means may be provided for pushing side wall extension 18 against the silage material.

The rear edge of side wall extension 18 is not straight but convex, thus providing a proper abutment to the stock of silage material 17, which often has a concave surface.

Preferably the telescopic arm 19 is provided at the outer side of side wall 6, thus reducing the risk of being fouled by silage material.

As is shown in the Figures, in particular in Figure 4, side wall extension 18 is provided on the inside of side wall 6. As a result of that side wall extension 18 is supported on the outside, so that the side wall extension cannot move out as a result of the pressure exerted thereon by the silage material.

Figure 1 is a plan view, which shows the device being reversed into contact with a stock of silage material 17, in such a manner that side wall extension 18 is extended on the right-hand side, whilst on the left-hand side of the device telescopic arm 19 has been telescoped by silage material 17. The two side wall extensions 18 thereby provide, each on one side of the device, a proper abutment to the stock of silage material 17.

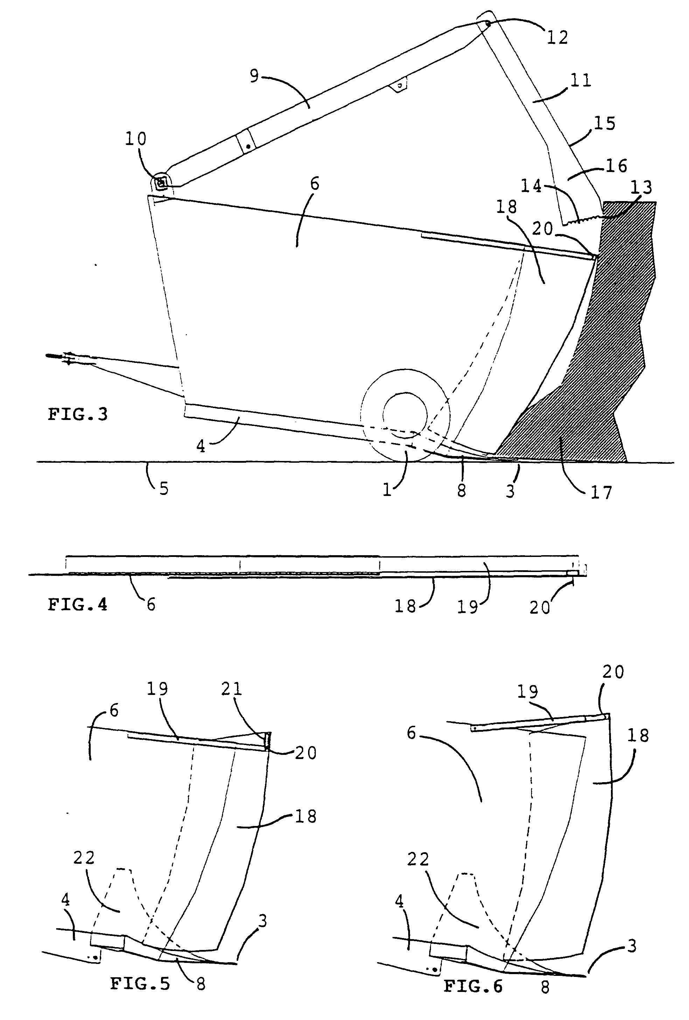

Figure 5 shows an embodiment wherein side wall extension 18 is provided with a slotted hole 21, in which a pivot pin which is attached to arm 19 at the location of pivot pin 20, can be moved, so that side wall extension 18 will be capable of moving in vertical direction with respect to side wall 16.

Said vertical movement may also be obtained by pivotably attaching telescopic arm to side wall 6, as is indicated in Figure 6.

A guide member 22 may be mounted on bottom 4 or on the extended part 8 thereof, which guide member may form a guide for the bottom side of side wall extension 18. Said guide member 22 may be in the shape of a substantially vertical plate, which prevents side wall extension 18 from moving in lateral direction. Said guide member may also be in the shape of a groove, in which the bottom edge of side wall extension 18 can move. Said groove may be provided with a stop member, which functions to limit the pivoting movement of side wall extension 18.

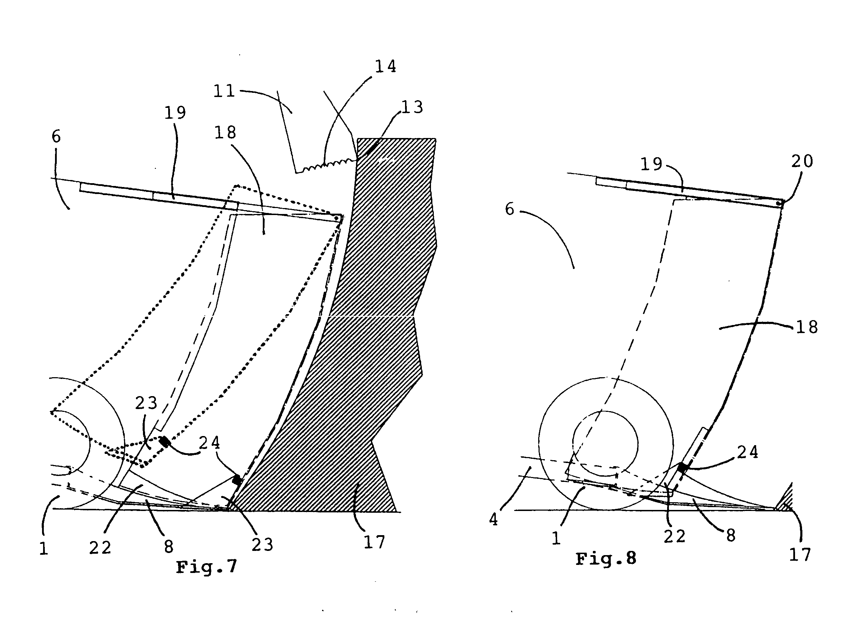

Figures 7 and 8 show an embodiment wherein side wall extension 18 is provided with a substantially triangular guide plate 23, which is attached to side wall extension 18 by means of a connecting element indicated by a black square 24. When the bottom edge of side wall extension 18 is positioned on the inside of plate-shaped guide member 22 (upward edge), guide plate 23 will extend outside guide member 22, as is clearly shown in Figure 7.

Figure 7 shows in a dotted line the position of side wall extension 18 after it has been pivoted forwards. -Guide plate 23 thereby extends beyond side wall 6, whilst connecting element 24 limits the pivoting movement to the position in which connecting element butts against the rear edge of side wall 6.

Figure 8 shows side wall extension 18 in its forwardly moved position, whereby connecting element 24 also functions as a stop member. Guide plate 23 thus effectively prevents side wall extension 18 from deflecting inwards from its plane of movement.

The embodiments of the invention shown in the Figures are to be considered as mere examples, also other embodiments are possible within the reaching of the invention as defined in the claims.

## Claims

1. A device for collecting silage material, which device is provided with a container comprising a bottom (4,8) and two opposed side walls (6), and which is furthermore provided with a cutting board (11) comprising a cutting member (13,14) at its bottom edge, which cutting board (11) is attached to at least one pivoting arm and which can be moved upwards and downwards in such a manner that the silage material can be cut from a stock (17) thereof, which is located behind said device, and be deposited in said container, whereby at least one side wall (6) is at its rear side provided with a side wall extension (18), which can pivot about a pivot pin extending substantially perpendicularly to said side wall (6), **characterized in that** said side wall extension (18) is capable of pivoting as well as translating movement in a substantially vertical plane.

2. A device according to claim 1, **characterized in that** said side wall extension is capable of pivoting movement about a horizontal pivot pin (20), which is near the upper edge and the rear edge of said side wall extension attached to an attaching member (19) , which can be moved rearward and forward with respect to said side wall (6).

3. A device according to any one of the preceding claims, **characterized in that** said attaching member (19) consists of a rearwardly extensible arm, which is attached to said side wall (6).

4. A device according to any one of the preceding claims, **characterized in that** said attaching member (19) is pushed into the extended position under the influence of a force exerted thereon.

5. A device according to any one of the preceding claims, **characterized in that** the rear edge of said side wall extension (18) is convex.

6. A device according to any one of the preceding claims, **characterized in that** said side wall extension (18) is mounted on the inside of said side wall (6).

7. A device according to any one of the preceding claims, **characterized in that** said bottom (4,8) is provided with a guide member (22) for guiding said side wall extension (18).

8. A device according to claim 7 or 8, **characterized in that** said side wall extension (18) is near its corner point between rear edge and bottom edge provided with a guide plate (23), which is mounted on the outside of said side wall extension (18), substantially parallel thereto and spaced therefrom, and in that said bottom (4,8) is provided with an upwardly extending guide edge, which may extend to a position between said guide plate (23) and said side wall extension (18).

9. A device according to claim 8, **characterized in that** said guide plate (23) is positioned on the outside of said side wall (6) in the forward position of the bottom side of said side wall extension (18).

10. A device according to any one of the preceding claims, **characterized in that** said bottom (4,8) is provided with a stop member for defining the extreme pivoted position of the side wall extension (18).

11. A device according to any one of the preceding claims, **characterized in that** said side wall extension (18) attached to the attaching member (19) in such a manner that it is also capable of moving in a substantially upward direction.

12. A device according to claim 11, **characterized in that** said side wall extension (18) is provided with a slot (21), in which a pivot pin (20) secured to the attaching member (19) can move.

13. A method for collecting silage material, wherein silage material is cut from a stock (17) thereof by means of a downwardly pivoting cutting board (11), after which said silage material is deposited in a container, whereby one side wall (6) of the container is extended in rearward direction by means of a pivotable side wall extension (18), **characterized in that** said side wall extension (18) is pivoted about a pin which is moved in rearward and/or forward direction with respect to said side wall (6).

14. A method according to claim 13, **characterized in that** the device according to any one of the preceding claims is used.

## Patentansprüche

1. Vorrichtung zum Aufnehmen von Silagematerial, wobei die Vorrichtung mit einem Behälter versehen ist, welcher einen Boden (4, 8) und zwei einander gegenüberliegende Seitenwände (6) aufweist, und die ferner mit einer Schneidplanke (11) versehen ist, welche an ihrem unteren Rand ein Schneidelement (13, 14) aufweist, wobei die Schneidplanke (11) an wenigstens einem Schwenkarm befestigt ist und nach oben und unten in einer Weise bewegbar ist, dass das Silagematerial, welches sich hinter der Vorrichtung befindet und im Behälter untergebracht wird, von einem Lagervorrat (17) abgeschnitten werden kann, wobei wenigstens eine Seitenwand (6) an ihrer Rückseite mit einer Seitenwandverlängerung (18) versehen ist, die um einen Schwenkbolzen herum schwenkbar ist, welcher sich im Wesentlichen senkrecht zur Seitenwand erstreckt (6), **dadurch gekennzeichnet**, dass die Seitenwandverlängerung (18) in einer im Wesentlichen vertikalen Ebene zu sowohl einer Schwenk- als auch zu einer Translationsbewegung fähig ist.

2. Vorrichtung gemäß Anspruch 1, **dadurch gekennzeichnet** dass die Seitenwandverlängerung zu einer Schwenkbewegung um einen horizontalen Schwenkbolzen (20) fähig ist, der in der Nähe des oberen Randes und des hinteren Randes der Seitenwandverlängerung an einem Halteelement (19) befestigt ist, welches bezüglich der Seitenwand (6) nach hinten und nach vorne bewegbar ist.

3. Vorrichtung gemäß einem der vorhergehenden Ansprüche, **dadurch gekennzeichnet**, dass das Halteelement (19) aus einem nach hinten ausfahrbaren, an der Seitenwand (6) befestigten Arm besteht.

4. Vorrichtung gemäß einem der vorhergehenden Ansprüche, **dadurch gekennzeichnet**, dass das Halteelement (19) unter dem Einfluss einer darauf ausgeübten Kraft in die ausgefahrene Position geschoben wird.

5. Vorrichtung gemäß einem der vorhergehenden Ansprüche, **dadurch gekennzeichnet**, dass der hintere Rand der Seitenwandverlängerung (18) konvex ist.

6. Vorrichtung gemäß einem der vorhergehenden Ansprüche, **dadurch gekennzeichnet**, dass die Seitenwandverlängerung (18) an der Innenseite der Seitenwand (6) montiert ist.

7. Vorrichtung gemäß einem der vorhergehenden Ansprüche, **dadurch gekennzeichnet**, dass der Boden (4, 8) zum Führen der Seitenwandverlängerung (18) mit einem Führungselement (22) versehen ist.

8. Vorrichtung gemäß Anspruch 7 oder 8, **dadurch gekennzeichnet**, dass die Seitenwandverlängerung (18) in der Nähe ihres Eckpunktes zwischen dem hinteren Rand und dem unteren Rand mit einer Führungsplatte (23) versehen ist, die an der Außenseite der Seitenwandverlängerung (18) im Wesentlichen parallel zu ihr und in einem Abstand von ihr montiert ist, und dadurch, dass der Boden (4, 8) mit einem sich nach oben erstreckenden Führungsrand versehen ist, der sich in eine Position zwischen der Führungsplatte (23) und der Seitenwandverlängerung (18) erstrecken kann.

9. Vorrichtung gemäß Anspruch 8, **dadurch gekennzeichnet**, dass die Führungsplatte (23) in der vorderen Lage der unteren Seite der Seitenwandverlängerung (18) an der Außenseite der Seitenwand (6) positioniert ist.

10. Vorrichtung gemäß einem der vorhergehenden Ansprüche, **dadurch gekennzeichnet**, das der Boden (4, 8) zum Definieren der größten Verschwenkposition der Seitenwandverlängerung (18) mit einem Stoppelement versehen ist.

11. Vorrichtung gemäß einem der vorhergehenden Ansprüche, **dadurch gekennzeichnet**, das die Seitenwandverlängerung (18) an dem Halteelement (19) in einer Weise angebracht ist, in welcher sie ebenso fähig ist, sich in eine Richtung im Wesentlichen nach oben zu bewegen.

12. Vorrichtung gemäß Anspruch 11, **dadurch gekennzeichnet**, dass die Seitenwandverlängerung (18) mit einem Schlitz (21) versehen ist, in welchem ein am Haltelement (19) festgelegter Schwenkbolzen (20) bewegbar ist.

13. Verfahren zum Aufnehmen von Silagematerial, wobei das Silagematerial von einem Lagervorrat (17) mittels einer abwärts schwenkenden Schneidplanke (11) abgeschnitten wird, danach das Silagematerial in einem Behälter abgelegt wird, wobei eine Seitenwand (6) des Behälters in Richtung nach hinten mittels einer schwenkbaren Seitenwandverlängerung (18) ausgefahren wird, **dadurch gekennzeichnet**, dass die Seitenwandverlängerung (18) um einen Bolzen herum geschwenkt wird, der bezüglich der Seitenwand (6) in Richtung nach hinten und/oder nach vorne bewegbar ist.

14. Verfahren gemäß Anspruch 13, **dadurch gekennzeichnet** dass die Vorrichtung gemäß einem der vorhergehenden Ansprüche verwendet wird.

## Revendications

1. Dispositif d'extraction d'une matière d'ensilage, lequel dispositif est muni d'un conteneur comprenant un fond (4, 8) et deux parois latérales opposées (6), et est par ailleurs muni d'un panneau de sectionnement (11) comprenant un organe sectionneur (13, 14) sur son bord inférieur, lequel panneau de sectionnement (11) est relié à au moins un bras pivotant, et peut être animé d'un mouvement vers le haut et vers le bas de façon telle que la matière d'ensilage puisse être sectionnée d'avec un stock (17) de ladite matière, situé derrière ledit dispositif, et puisse être déposée dans ledit conteneur, au moins l'une (6) des parois latérales étant pourvue, sur sa face postérieure, d'un prolongement (18) pouvant pivoter autour d'un tenon de pivotement s'étendant pour l'essentiel perpendiculairement à ladite paroi latérale (6), caractérisé par le fait que ledit prolongement (18) de la paroi latérale est apte à accomplir un mouvement tant pivotant, que translatoire, dans un plan sensiblement vertical.

2. Dispositif selon la revendication 1, caractérisé par le fait que ledit prolongement de la paroi latérale est apte à accomplir un mouvement pivotant autour d'un tenon horizontal de pivotement (20) relié, à proximité du bord supérieur et du bord postérieur dudit prolongement de la paroi latérale, à une pièce de liaison (19) pouvant être animée d'un mouvement vers l'arrière et vers l'avant par rapport à ladite paroi latérale (6).

3. Dispositif selon l'une quelconque des revendications précédentes, caractérisé par le fait que ladite pièce de liaison (19) consiste en un bras déployable vers l'arrière, qui est relié à ladite paroi latérale (6).

4. Dispositif selon l'une quelconque des revendications précédentes, caractérisé par le fait que ladite pièce de liaison (19) est poussée jusqu'à la position déployée sous l'action d'une force qui lui est appliquée.

5. Dispositif selon l'une quelconque des revendications précédentes, caractérisé par le fait que le bord postérieur dudit prolongement (18) de la paroi latérale est convexe.

6. Dispositif selon l'une quelconque des revendications précédentes, caractérisé par le fait que ledit prolongement (18) de la paroi latérale est monté sur la face interne de ladite paroi latérale (6).

7. Dispositif selon l'une quelconque des revendications précédentes, caractérisé par le fait que ledit fond (4, 8) est doté d'une pièce de guidage (22), en vue de guider ledit prolongement (18) de la paroi latérale.

8. Dispositif selon la revendication 7, caractérisé par le fait que ledit prolongement (18) de la paroi latérale est pourvu, à proximité de son point matérialisant le coin entre le bord postérieur et le bord inférieur, d'une plaque de guidage (23) qui est montée à l'extérieur dudit prolongement (18) de la paroi latérale, pour l'essentiel parallèlement et à distance de ce dernier ; et par le fait que ledit fond (4, 8) est muni d'un bord de guidage s'étendant vers le haut, qui peut gagner un emplacement situé entre ladite plaque de guidage (23) et ledit prolongement (18) de la paroi latérale.

9. Dispositif selon la revendication 8, caractérisé par le fait que ladite plaque de guidage (23) se trouve à l'extérieur de ladite paroi latérale (6), à l'emplacement situé à l'avant de la face inférieure dudit prolongement (18) de la paroi latérale.

10. Dispositif selon l'une quelconque des revendications précédentes, caractérisé par le fait que ledit fond (4, 8) est doté d'une pièce d'arrêt, en vue de définir la position extrême que le prolongement (18) de la paroi latérale a prise par pivotement.

11. Dispositif selon l'une quelconque des revendications précédentes, caractérisé par le fait que ledit prolongement (18) de la paroi latérale est relié à la pièce de liaison (19), de telle manière qu'il soit également doué de mobilité dans une direction sensiblement ascendante.

12. Dispositif selon la revendication 11, caractérisé par le fait que ledit prolongement (18) de la paroi latérale est pourvu d'une fente (21), dans laquelle est mobile un tenon de pivotement (20) fixé à la pièce de liaison (19).

13. Procédé d'extraction d'une matière d'ensilage, dans lequel de la matière d'ensilage est sectionnée d'avec un stock (17) de ladite matière, au moyen d'un panneau de sectionnement (11) pivotant vers le bas, après quoi ladite matière d'ensilage est déposée dans un conteneur, sachant que l'une (6) des parois latérales du conteneur est prolongée vers l'arrière, à l'aide d'un prolongement (18) apte à pivoter, caractérisé par le fait que ledit prolongement (18) de la paroi latérale est animé d'un pivotement autour d'un tenon auquel un mouvement est imprimé vers l'arrière et/ou vers l'avant par rapport à ladite paroi latérale (6).

14. Procédé selon la revendication 13, caractérisé par le fait qu'il est fait usage du dispositif selon l'une quelconque des revendications précédentes.
